# EUROPEAN PATENT APPLICATION

(11) **EP 4 844 369 A1**
(43) Date of publication of application: **25.11.2026**
(21) Application number: 25177945.0
(22) Date of filing: 21.05.2025
(51) Int. Cl.: G01N 17/00

(54) **ELECTRIC SYSTEM AND METHOD OF OPERATING AN ELECTRIC SYSTEM**

(71) Applicant: Hitachi Energy Ltd, 8050 Zürich (CH)
(72) Inventor: Meng, DeLun, Beijing, 100018 (CN); Zhang, Hui, Beijing, 100101 (CN); Wang, Yang, Beijing, 100077 (CN); Chen, Niya, Beijing, 100016 (CN); Sbravati, Alan, Raleigh, 27610 (US)
(74) Representative: Epping - Hermann - Fischer

(57) **Abstract**

An electric system (1) comprising an electrical transformer (2) is specified, wherein a component (3) of the electrical transformer (2) is in contact with a fluid (4). The electric system (1) comprises an optical detection device (6) configured to monitor an optical parameter of a sample (5) exposed to the fluid (4). The electric system (1) is configured to provide information on a corrosion state of the component (3) based on the monitored optical parameter of the sample (5).

Further, a method of operating an electric system (1) with an electrical transformer (2) is specified.

## Description

The present disclosure relates to an electric system and to a method of operating an electric system.

Corrosive sulfur in electrical transformer fluids may cause problems such as the corrosion of silverplated contacts and the deposition of conductive or semi-conductive contaminants possibly formed by the reaction of the fluid and the metallic surfaces, such as in the case of copper sulfide being formed over the surface of bare copper. This may result in failure of the electrical transformer induced by the presence of corrosive sulfur if a flashover occurs due to flaking of deposited silver sulfide and/or the silver-plated layer from sliding contacts, for example.

In order to determine the corrosion state of such coatings inside the electrical transformer, an internal in-situ inspection may be performed. However, this inspection is challenging as the spaces are tight and the environment is not human-friendly. Alternatively, the inspection may be performed by a submarine robot. However, this requires expensive equipment. In addition, it is difficult for the robot to inspect all critical points within the transformer and it will not be able to evaluate the potential deposition of contaminants inside paper insulated conductors. In both cases the inspection causes high costs and time consuming outage.

Embodiments of the disclosure relate to reducing the inspection effort, in particular in terms of the time and costs required.

According to an embodiment of an electric system, the electrical system comprises an electrical transformer, wherein a component of the electrical transformer is in contact with a fluid. The electric system comprises an optical detection device configured to monitor an optical parameter of a sample exposed to the fluid. The electric system is configured to provide information on a corrosion state of the component based on the monitored optical parameter of the sample.

Thus, an optical monitoring of the sample may be performed during operation of the electric system.

The electrical transformer may be any type of transformers using active components immersed in a fluid. For example, the electrical transformer is a power transformer.

The component may be any component of the electrical transformer whose properties may degrade over time due to the corrosiveness of the fluid. For example, corrosion caused by the fluid may negatively affect electric properties such an electric contact resistance or an electric conductivity or other properties of the component.

For example, the fluid comprises a mineral oil, an ester, or a silicone liquid. During operation of the electric system there may be a circular flow of the fluid inside the electrical transformer.

The monitored optical parameter of the sample can be used to obtain information on the corrosion state of the component. Thus, the corrosion state of the component can be estimated without having to perform an in-situ inspection of the component itself.

Compared to an inspection by a human, the cost and effort may be significantly reduced. Further, it is not necessary to expose a human to the safety risks within an electrical transformer. In addition, the reliability of the electrical transformer can be increased as a predictive or preventive maintenance can be performed before the electrical transformer fails. Thus, further damages caused by the failure of the electrical transformer can be avoided.

The sample can be located inside a pipe or a valve or any other specific location within the transformer where the sample is in contact with the fluid. For example, the sample may be located in an isolated or depressurized valve or pipe or at the most aggressive location within the electrical transformer.

The pipe or valve used for the sample may be a pipe or valve already present in the electrical transformer for other reasons.

Alternatively, the pipe or valve used for the sample may be specifically provided for a proper placement of the sample. For example, the sample may be installed in a side stream which is isolated and/or depressurized if the flow velocity and/or pressure of the fluid within the electrical transformer is high.

According to a further embodiment of the electric system, a surface of the sample is made from the same material as a corrosion-prone surface of the component.

For example, the surface of the sample may comprise silver or consist of silver. For example, the sample may be formed from pure silver or from a silverplated metal such as copper. Alternatively, the sample may comprise or consist of copper or may comprise copper with paper. Alternatively, the sample may comprise or consist of silicon steel or may comprise silicon steel with anticorrosion coating. In principle, any material that is used as a coating material and/or as a conductive material within the electrical transformer may be suitable for the surface of the sample.

The electric system may also comprise two or more than two samples comprising different coatings and/or consisting of different materials. Different samples may be used to represent different elements or coatings and/or different degradation processes within the electrical transformer.

According to a further embodiment of the electric system, the corrosion-prone surface is one of: an electric contact surface of an on-load tap changer, a bare copper conductor or contact of the electrical transformer, an insulated paper covered copper winding conductor of the electrical transformer, an anticorrosion coating coated core material of the electrical transformer.

For example, the component is an on-load tap changer. For example, the electric contact surface is a portion of a selector contact or a collector ring.

According to a further embodiment of the electric system, the monitored optical parameter is a color of the sample. A color change of the sample may be used as an indicator for corrosion due to corrosive matter, such as sulphur and sulphide in the fluid. Thus, the corrosion state of the component may be assessed based on the fluid-induced color change of the sample over time.

According to a further embodiment of the electric system, the electric system, the optical detection device comprises an imaging device configured to capture pictures of the sample. In particular, the imaging device provides a spatially resolved information on the sample. These pictures may be analysed to determine the color change of the sample induced by the fluid. For example, a machine learning algorithm may be used for the analysis.

According to a further embodiment of the electric system, the monitored optical parameter is a reflectivity of the sample. The reflectivity may be used as an indicator for corrosion. In other words, an analysis of the corrosion state may be based on a difference between an emitted and a received light signal.

In this context, the term "light" is not limited to electromagnetic radiation in the visible spectral range, but also includes electromagnetic radiation in the infrared or ultraviolet spectral range.

For example, the electric system comprises an optical fiber configured to guide the light between the sample and the detector. Using an optical fiber helps to arrange the sample close to the component. In particular, the sample may also be positioned at a place, where it is not visible through an inspection window.

An optical detector that does not provide any spatial resolution may be sufficient to provide information on the reflected light. However, the detector may also be an imaging device.

Likewise an imaging device used to capture pictures of the sample may additionally be used as detector to obtain information on the intensity of the reflected light. Thus, the imaging device may provide both the function of capturing pictures of the sample and the function of measuring the intensity of the reflected light.

The detected optical signal such as pictures or information on the reflected light may be recorded locally or remotely.

According to a further embodiment of the electric system, the electric system comprises a remote communication unit to transmit the detected optical signal. For example, the optical detection device is connected to a remote communication unit of the electrical transformer. The connection to the remote communication unit may be made by a wire or by a wireless communication. Alternatively, the optical detection device may comprise an individual remote communication unit.

According to a further embodiment of the electric system, the electric system comprises an inspection window, wherein the sample is visible through the inspection window. For example, the optical detection device is located outside the tank of the electrical transformer. Thus, the optical detection device itself is not in contact with the fluid.

According to a further embodiment of the electric system, the optical detection device comprises an imaging device configured to image the sample through the inspection window.

According to a further embodiment of the electric system, the electric system comprises a Buchholz relay. The Buchholz relay may be arranged in a fluid path between the tank and an expansion vessel (also referred to as conservator) connected to the tank. The Buchholz relay may be used to as a safety switch that turns off the electrical transformer in case of a failure that may be caused by a leakage of the fluid or by the presence of gas in the fluid that repels the fluid around the Buchholz relay, for example.

In particular, the Buchholz relay and the sample may be visible through the inspection window. Thus, the inspection window already provided for monitoring the Buchholz relay may be used for the optical monitoring of the sample as well.

According to a further embodiment of the electric system, the optical detection device comprises a detector unit and an optical fiber configured to guide electromagnetic radiation between the sample and the detector unit. Thus, the detector unit itself is not in contact with the fluid. For example, the optical fiber extends via a lead-through into the tank or into a pipe or chamber connected to the tank.

According to a further embodiment of the electric system, the sample is configured as a coating of an end of the optical fiber. Thus, the sample is in direct contact with the optical fiber. As the coating is exposed to the fluid, the reflectivity of the coating may decrease over time.

According to a further embodiment of the electric system, the sample is configured as a coating of a section of the electric system or as a sample strip. For example, the section is a surface of a Buchholz relay of the electric system, wherein the section is visible through an inspection window assigned to the Buchholz relay. In other words, a section of the Buchholz relay may be coated in order to represent a sample, whose optical characteristics may be used to obtain information on the corrosion state of one or more components of the electrical transformer.

According to a further embodiment of the electric system, the sample is located inside a chamber with a circulation of the fluid, wherein the fluid is heatable to a temperature representative of the actual temperature at the corrosion-prone surface of the component. Thus, the sample may be subjected to an environment that substantially corresponds to the environment of the corrosion-prone surface of the component to be monitored.

The electric system may also comprise several chambers representing different temperatures occurring within the electrical transformer. For example, the temperature may correspond to a temperature at the bottom or at the top of the tank or at a specific location such as the position of the on-load tap changer.

The electric system may further comprise a thermometer configured to determine a temperature of the sample. The temperature of the sample may be used to more precisely assess the corrosion state of the component of the electrical transformer.

Further, a method of operating an electric system is specified.

According to an embodiment of the method, the electric system comprises an electrical transformer with a component in contact with a fluid, wherein a corrosion state of the component is assessed during operation of the electric system by monitoring an optical parameter of a sample that is exposed to the fluid.

By means of the method, an optical parameter of a sample immersed in an electrical transformer fluid may be used to assess the fluid corrosivity and the impact on one or more different materials used inside the electrical transformer. Consequently, a direct access to the critical components comprising a corrosion-prone surface is not required.

The electric system described above is particularly suited to be operated using the method. Thus, features described in connection with the electric system may also be used for the method and vice versa.

According to a further embodiment of the method, the corrosion state is assessed based on a change in color and/or a change in reflectivity of the sample. The monitored optical parameter can be used as an indicator or as a criterion as to when preventive maintenance of the electrical transformer has to be performed.

Features described above in connection with an embodiment of the electric system or the method may be combined with features described in connection with other embodiments of the electric system or the method unless the features are contradictory.

The accompanying figures are included to provide a further understanding. In the figures, elements of the same structure and/or functionality may be referenced by the same reference signs. It is to be understood that the embodiments shown in the figures are illustrative representations and are not necessarily drawn to scale.

In the Figures:
Figure 1A shows an electric system according to an exemplary embodiment in a schematic representation;
Figure 1B shows a detail of Figure 1A;
Figure 2A shows an electric system according to an exemplary embodiment in a schematic representation;
Figure 2B shows a detail of Figure 2A;
Figure 3A shows an electric system according to an exemplary embodiment in a schematic representation;
Figure 3B shows an example of a detail of the electric system according to Figure 3A;
Figure 3C shows a further example of a detail of the electric system according to Figure 3A;
Figure 4 shows a detail of an electric system according to an exemplary embodiment in a schematic representation; and
Figure 5 shows an exemplary embodiment of a method of operating an electric system.

While the disclosure is amenable to various modifications and alternative forms, specifics thereof have been shown by way of example in the figures and will be described in detail. It should be understood, however, that the intention is not to limit the disclosure to the particular embodiments described. On the contrary, the intention is to cover all modifications, equivalents, and alternatives falling within the scope of the disclosure defined by the appended claims.

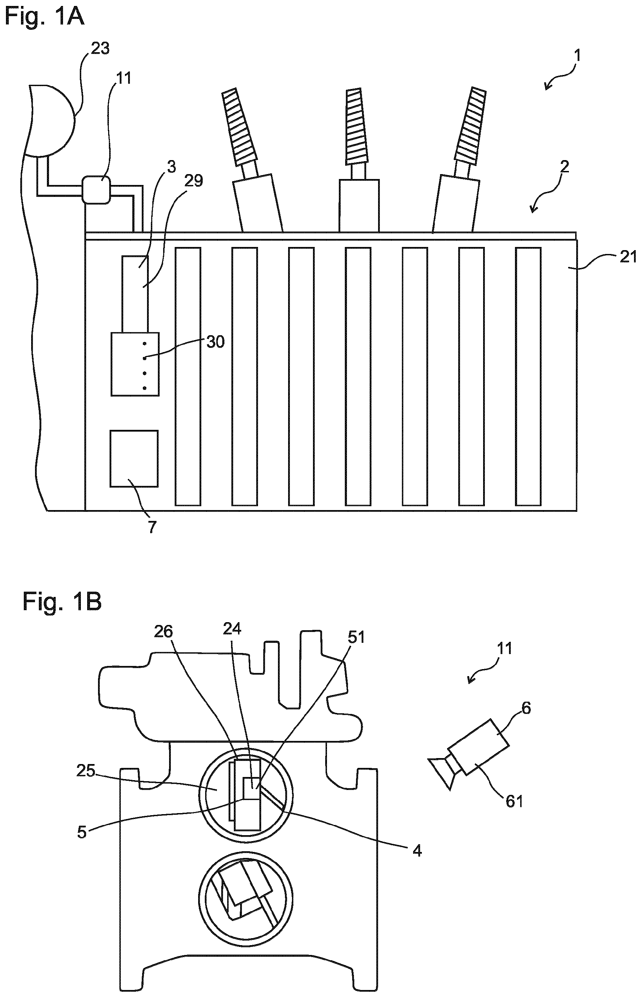

The electric system 1 illustrated in Figure 1A comprises an electrical transformer 2 wherein a component 3 of the electrical transformer is in contact with a fluid 4. Figure 1B shows a detail 11 of the electric system 1 depicted in Figure 1A.

For example, the fluid 4 is an electrically insulating fluid such as a mineral oil, a silicone oil, or an ester fluid.

The electric system 1 further comprises an optical detection device 6 configured to monitor an optical parameter of a sample 5 exposed to the fluid 4. The electric system 1 is configured to provide information on a corrosion state of the component 3 based on the monitored optical parameter of the sample 5.

Thus, at least one optical parameter of the sample 5 is optically monitored during operation of the electric system 1.

The electric system 1 further comprises a tank 21 configured to receive the active components of the electrical transformer 2 immersed in the fluid **4.**

The electric system 1 further comprises an expansion vessel 23. The Buchholz relay 26 is arranged in a fluid path between the tank 21 and the expansion vessel 23.

In the exemplary embodiment of Figure 1A the component 3 with a corrosion-prone surface 30 is an on-load tap changer 29 of the electric system 1.

For example, the switching contacts, the selector contacts, and/or the collector rings of the on-load tap changer 29 may represent corrosion-prone surfaces 30.

If the switching contacts, the selector contacts, and/or the collector rings of the on-load tap changer 29 are plated with silver, a surface of the sample 5 may be made from silver as well. For example, the sample 5 may be made from pure silver or may comprise a metal such as copper coated with silver. In particular, the sample 5 may be coated with the same plating process as the component 3 comprising the corrosion-prone surface 30 to be monitored.

In principle, the component 3 may be any component of the electrical transformer 2 that may be negatively affected by the fluid 4 during operation of the electric system 1. For example, the corrosion-prone surface 30 may be a bare copper conductor or a contact of the electrical transformer 2, an insulated paper-covered copper winding conductor of the electrical transformer or an anti-corrosion coating coated core material of the electrical transformer 2.

In the exemplary embodiment of Figure 1B, the optical detection device 6 is an imaging device 61 such as a camera configured to image the sample 5. The sample 5 is configured as a coating 51 of a section 24 of the electric system 1. In the exemplary embodiment shown, the section 24 is a surface of a Buchholz relay 26 that is optically accessible through an inspection window 25. In particular, the coating 51 does not have any impact on the functionality of the Buchholz relay 26.

Pictures of the sample 5 taken by the imaging device 26 can be used to determine the color of the sample 5. For example, the imaging device 61 is a camera that takes pictures of the sample 5 at a predefined repetition rate in order to monitor the change in color of the sample 5. The color change may be used to obtain information on the corrosion state of the sample 5 which in turn provides information on the corrosion state of the corrosion-prone surface 30 of the component 3 to be monitored.

The assessment of the corrosion state of the sample 5 based on the pictures taken by the imaging device 61 may be performed manually or automatically via image recognition. For example, a machine learning algorithm may be used.

The data obtained from the optical detection device 6 such as pictures taken by the imaging device 61 may be stored locally or remotely.

For example, the optical detection device 6 may be connected to a remote communication unit 7 so that raw data of the optical detection device 6 or already processed or preprocessed data may be transmitted via the remote communication unit 7 for a remote monitoring of the electric system 1.

In the exemplary embodiment of Figure 1B, the existing inspection window 25 assigned to the Buchholz relay 26 can be used for the optical monitoring. Thus, it is not necessary to provide an addition inspection window 25.

The electric system 1 may also comprise two or more samples 5 located at different positions within the electric system 1 and/or comprising different materials. Thus, the impact of the fluid 4 on different materials that are used within the electric system 1 and are in contact with the fluid 4 can be monitored.

The location of the sample 5 may also be selected based on the temperature and/or the pressure and/or the flow velocity of the fluid 4 during operation of the electric system 1. The sample 5 may be installed in an existing or newly added side stream which may be isolated or depressurized if the flow velocity and the pressure of the fluid are high.

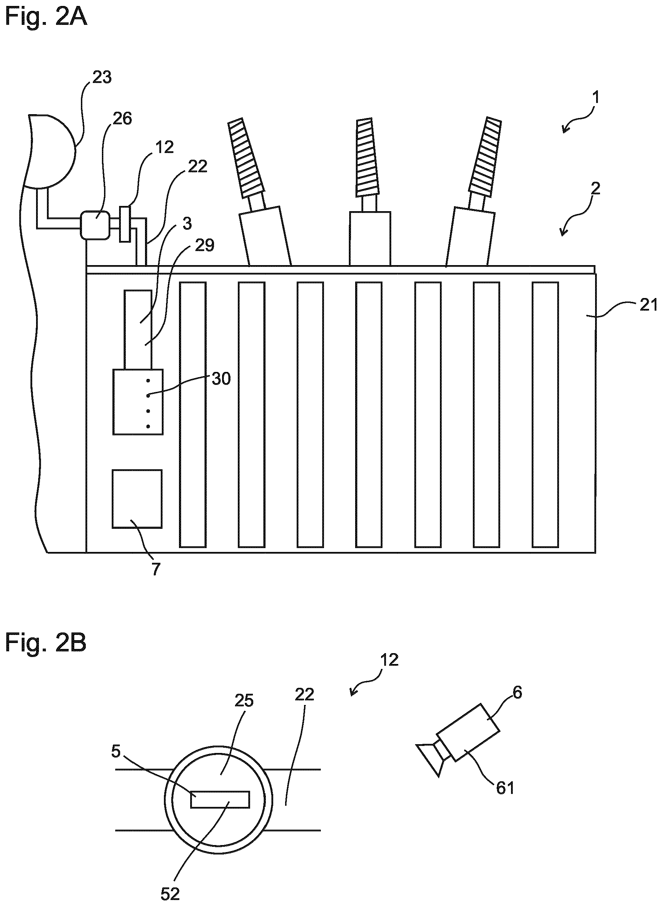

The exemplary embodiment of Figures 2A and 2B substantially corresponds to the exemplary embodiment of Figures 1A and 1B.

In departure therefrom, the sample 5 is configured as a sample strip 52. Thus, the sample strip 52 can be provided as a separate element that is mounted within the electric system 1.

As illustrated in a detail 12 depicted in Figure 2B, the sample strip 52 may be located in a pipe 22 such that it can be imaged by the imaging device 61 through an inspection window 25.

For example, the pipe 22 may connect the tank 21 to the expansion vessel 23. However, any other location may also be appropriate as long as the sample 5 is accessible for an optical inspection.

A sample 5 configured as sample strip 52 may also be used in the exemplary embodiment of Figures 1A and 1B such that the sample strip 52 is visible through the inspection window 25 assigned to the Buchholz relay 26.

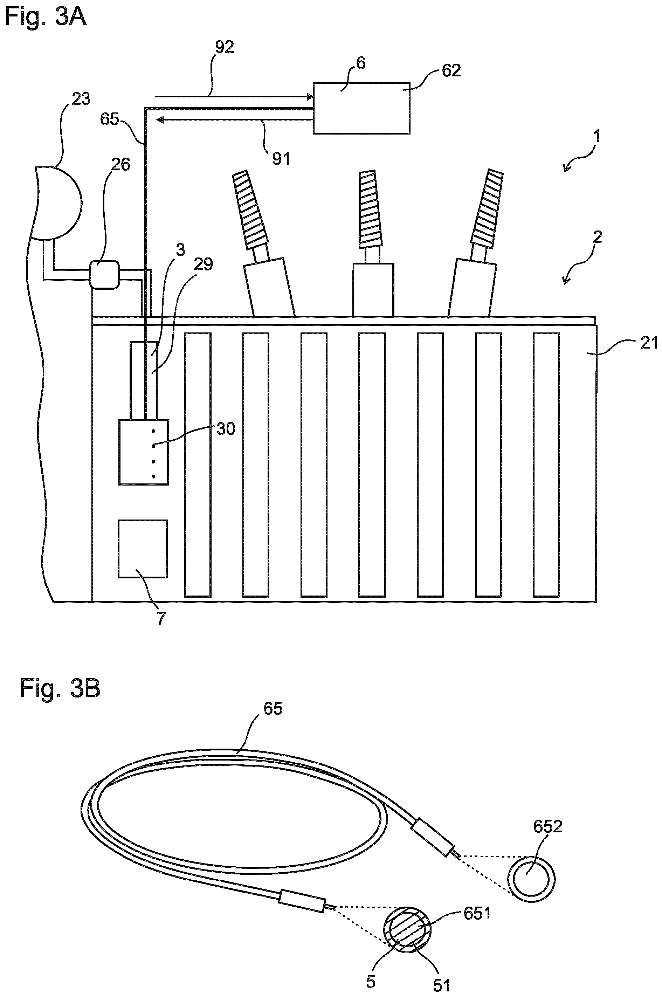

The exemplary embodiments of Figures 3A to 3C substantially correspond to the exemplary embodiment of Figures 1A and 1B.

In contrast, the optical detection device 6 comprises a detector unit 62 and an optical fiber 65 configured to guide light from the detector unit 62 to the sample 5 and back. Thus, the detector unit 62 may be arranged such that it is not in contact with the fluid 4. The detector unit 62 may comprise an emitter such as a light emitting diode or a laser diode to emit light to irradiate the sample 5.

An emitted light 91 and a reflected light 92 reflected off the sample 7 are schematically illustrated in Figure 3A as arrows.

As the fluid 4 affects the reflectivity of the sample 5, a change in reflectivity of the sample 5 may be used to assess the corrosion state of the sample 5 thereby providing information on the corrosion state of the component 3 to be monitored.

Contrary to the exemplary embodiment of Figures 1A and 1B, the detector unit 62 does not necessarily have to provide a spatial resolution. For example, a photodiode may be used to detect the reflected light 92. However, an imaging device may also be used for the detector unit 62.

An inspection window is not required for the optical monitoring of the sample 5. This facilitates the placement of the sample 5 close to the component 3 to be monitored.

In the exemplary embodiment of Figure 3B, the sample 5 is configured as a coating 51 of an end 651 of the optical fiber 65. In contrast, the opposite end of the fiber 652, which faces the detector unit 62, is not provided with the coating. As the coating 51 is exposed to the fluid 4, the reflectivity of the coating 51 decreases over time. The light does not pass through the fluid 4 on its way to the sample 5 and back to the detector unit 62. Consequently, the transmissivity of the fluid 4 does not have any impact on the detected signal.

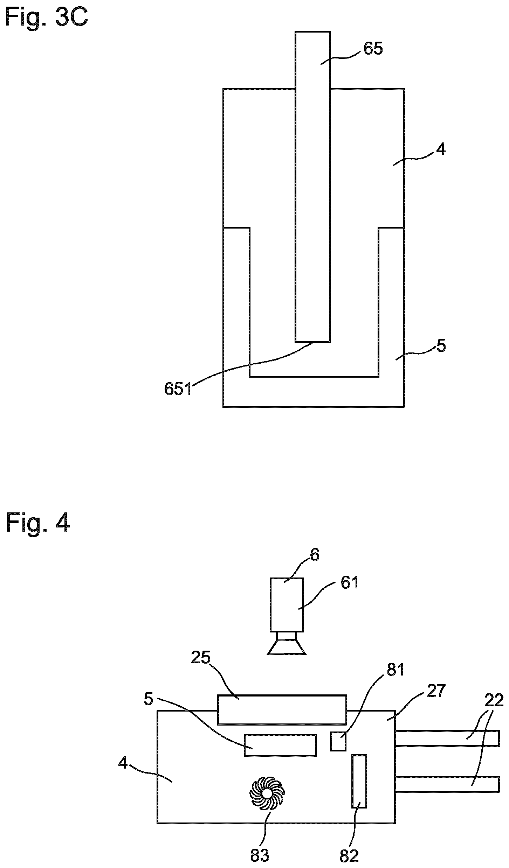

In the exemplary embodiment of Figure 3C, the sample 5 is spaced apart from the end of the optical fiber 651 that faces the sample 5. Thus, the light passes through the fluid 4 on its way from the optical fiber 65 to the sample 5 and back.

The surface of the sample 5 that faces the end 651 of the fiber 65 is in direct contact with the fluid 4. The exemplary embodiment of Figure 4 substantially corresponds to the exemplary embodiment described in connection with Figures 1A and 1B.

In contrast, the sample 5 is located in a chamber 27 which is connected to the tank of the electrical transformer 2 via pipes 22, for example. A circulating device 83 ensures a circulation of the fluid 4 between the chamber 27 and the tank 21.

As described in connection with Figures 1A and 1B, the sample 5 is detected by an imaging device 61 through an inspection window 25 provided in the chamber 27.

The chamber 27 further comprises a heating device 82. For example, the heating device 82 may be used to heat the fluid 4 within the separate chamber 27 to a temperature that corresponds to a temperature of the fluid at the position of the corrosion-prone surface 30 of the component 3 to be monitored. For example, a thermometer 81 may be arranged in the chamber 27 and/or in the proximity of the component 3 to be monitored.

A chamber 27 as illustrated in Figure 4 may also be used for an optical monitoring via an optical fiber 65 as described in connection with Figures 3A to 3C.

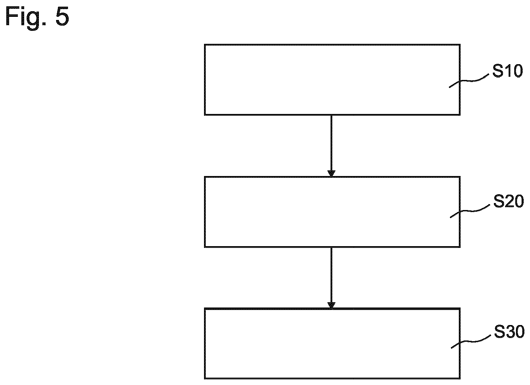

Figure 5 schematically illustrates a method of operating an electric system 1. Structural features mentioned in connection with the method are provided with the same reference signs as in the previous figures for the sake of better understanding.

The electric system 1 may be configured as described in connection with the previous figures.

In particular, the electric system 1 comprises a component 3 in contact with a fluid 4.

In a step S10, an optical parameter of a sample 5 that is exposed to the fluid 4 is measured. This can be done continuously or at a predetermined repetition rate. For example, the optical parameter of the sample 5 is a change in color and/or a change in reflectivity of the sample 5.

In a step S20, the corrosion state of the component 3 is assessed based on the monitored optical parameter of the sample 5.

A correlation between a color change or a reflectivity change of the sample 5 and the corrosion state of the component 3 to be monitored can be built up in an accelerated aging test, for example.

Thus, the contact resistance or the electrical conductivity of the component 3 or any other relevant parameter affected by the corrosiveness of the fluid 4 can be assessed during operation of the electric system 1. This assessment does not require a direct access to the component 3 to be monitored.

In a step S30, maintenance of the electric system 1 may be performed. This can be done at a stage where the data obtained from the optical monitoring indicates that maintenance or replacement of the component 3 is required. Consequently, failure of the electric system 1 due to corrosion effects can be avoided. This helps to increase the reliability of the electric system 1.

Furthermore, the operating costs can be lowered as inspections of the component 3 or corrosion-prone surfaces 30 thereof by a human or a robot can be dispensed with. In particular it is not necessary for a human to enter the harsh confined space environment within the electrical transformer 2 for an inspection of the component 3 with a corrosion-prone surface 30.

As described above, the cost and effort for an inspection inside the electrical transformer can be significantly reduced.

Furthermore, maintenance of the electric system 1 can be scheduled based on the optical monitoring such that preventive maintenance can be performed. Consequently, the risk of failure of the electrical transformer 2 due to corrosion effects can be eliminated or at least significantly reduced.

The embodiments shown in the Figures 1 to 5 as stated represent exemplary embodiments of the improved electric system and method for operating the electric system; therefore, they do not constitute a complete list of all embodiments according to the improved electric system and method for operating the electric system. Actual electric systems and methods for operating the electric system may vary from the embodiments shown in terms of arrangements, devices, and signals for example.

### Reference Signs

- 1: electric system
- 11: detail
- 12: detail
- 2: electrical transformer
- 21: tank
- 22: pipe
- 23: expansion vessel
- 24: section
- 25: inspection window
- 26: Buchholz relay
- 27: chamber
- 29: on-load tap changer
- 3: component
- 30: corrosion-prone surface
- 4: fluid
- 5: sample
- 51: coating
- 52: sample strip
- 6: optical detection device
- 61: imaging device
- 62: detector unit
- 65: optical fiber
- 651: end of optical fiber
- 652: end of optical fiber facing detector unit
- 7: remote communication unit
- 81: thermometer
- 82: heating device
- 83: circulating device
- 91: emitted light
- 92: reflected light
- S10: step
- S20: step
- S30: step

## Claims

1. An electric system (1) comprising an electrical transformer (2), wherein
- a component (3) of the electrical transformer (2) is in contact with a fluid (4);
- the electric system (1) comprises an optical detection device (6) configured to monitor an optical parameter of a sample (5) exposed to the fluid (4); and
- the electric system (1) is configured to provide information on a corrosion state of the component (3) based on the monitored optical parameter of the sample (5).

2. The electric system according to claim 1,
wherein a surface of the sample (5) is made from the same material as a corrosion-prone surface (30) of the component (3).

3. The electric system according to any one of the preceding claims,
wherein the corrosion-prone surface (30) is one of: an electric contact surface of an on-load tap changer (29), a bare copper conductor or contact of the electrical transformer (2), an insulated paper covered copper winding conductor of the electrical transformer (2), an anticorrosion coating coated core material of the electrical transformer (2).

4. The electric system according to any one of the preceding claims,
wherein the monitored optical parameter is a color of the sample (5).

5. The electric system according to any one of the preceding claims
wherein the monitored optical parameter is a reflectivity of the sample (5).

6. The electric system according to any one of the preceding claims,
wherein the electric system (1) comprises an inspection window (25), wherein the sample is visible through the inspection window (25).

7. The electric system according to claim 6,
wherein the optical detection device (6) comprises an imaging device (61) configured to image the sample (5) through the inspection window (25).

8. The electric system according to claim 6 or 7,
wherein the electric system (1) comprises a Buchholz relay (26), wherein the Buchholz relay (26) and the sample (5) are visible through the inspection window.

9. The electric system according to any one of the preceding claims,
wherein the optical detection device (6) comprises a detector unit (62) and an optical fiber (65) configured to guide electromagnetic radiation between the sample (5) and the detector unit (62).

10. The electric system according to claim 9,
wherein the sample (5) is configured as a coating (655) of an end (651) of the optical fiber (65).

11. The electric system according to any one of the preceding claims,
wherein the sample (5) is configured as a coating (51) of a section (24) of the electric system (1) or as a sample strip (52).

12. The electric system according to any one of the preceding claims,
wherein the sample (5) is located inside a chamber (27) with a circulation of the fluid (4), wherein the fluid (4) is heatable to a temperature representative of the actual temperature at the component (3).

13. A method of operating an electric system (1) with an electrical transformer (2) comprising a component (3) in contact with a fluid (4), wherein a corrosion state of the component (3) is assessed during operation of the electric system (1) by monitoring an optical parameter of a sample (5) that is exposed to the fluid (4).

14. The method according to claim 13,
wherein the corrosion state is assessed based on a change in color and/or a change in reflectivity of the sample (5).

15. The method according to claim 13 or 14,
wherein the electric system (1) is an electric system (1) according to any one of claims 1 to 12.
